# EUROPEAN PATENT APPLICATION

(11) **EP 1 981 274 A1**
(43) Date of publication of application: **15.10.2008**
(21) Application number: 07300942.5
(22) Date of filing: 12.04.2007
(51) Int. Cl.: H04N 7/16, H04N 5/445

(54) **Multimedia descriptions for adding additional multimedia**

(71) Applicant: Alcatel Lucent, 75008 Paris (FR)
(72) Inventor: Weik, Hartmut, 70195 Stuttgart (DE)
(74) Representative: Brose, Gerhard

(57) **Abstract**

The invention concerns a method for providing multimedia where the multimedia (ME) comprises a description (D) indicating at least one area (A) that is suitable for embedding additional multimedia (aM), where the method comprises the step of embedding (EM) additional multimedia (aM) into the multimedia at the area (A) indicated by the description. Alternatively the method for providing multimedia (ME), a multimedia (M) comprises a description indicating areas (I) that are indicated as carrying important information, where the method comprises the steps of identifying (IA) an area that is suitable for embedding additional multimedia (aM), where the area (A) does not intersect with the area indicated by the description, and embedding (EM) additional multimedia (aM) into the multimedia at the identified area.

The invention concerns also a corresponding computer software product and a device.

## Description

The invention concerns a computer software product, a device and a method for providing a multimedia stream.

Representing information about the content, not the content itself ("the bits about the bits") is now standardized for multimedia as the so-called multimedia content descriptions or short descriptions. The Moving Picture Experts Group (MPEG), for instance, has standardized MPEG-7 as a multimedia content description standard. For definitions of these terms see http://en.wikipedia.org/wiki/Multimedia, http://en.wikipedia.org/wiki/Content, http://en.wikipedia.org/wiki/Description. The description will be associated with the multimedia content itself, to allow fast and efficient searching for material that is of interest to the user. MPEG-7 is not a standard which deals with the actual encoding of moving pictures and audio, like MPEG-1, MPEG-2 and MPEG-4. It uses Extensible Markup Language (XML) to store metadata, i.e. information about the content, and can be attached to time code in order to tag particular events. MPEG-7 provides a set of description schemes and descriptors and a language to specify these schemes, called the Description Definition Language (DDL), see e.g. an overview in IEEE TRANSACTIONS ON CIRCUITS AND SYSTEMS FOR VIDEO TECHNOLOGY, VOL. 11, NO. 6, JUNE 2001, MPEG-7 Multimedia Description Schemes, Philippe Salembier and John R. Smith.

A banner ad or a label is a form of injected multimedia content e.g. for advertising. This form advertising entails embedding an advertisement into a multimedia. Usually such an advertisement is constructed from a multimedia object, often employing animation or sound to maximize presence. Banners notify users e.g. of a product or service.

To decorate multimedia with banners in statically defined temporally and spatial areas is known, but there occurs a problem when the evolution of a multimedia stream is complex and injected additional multimedia like the aforementioned banner would hide important information.

For instance, today's embedded icons are placed on random or fixed locations in a video stream. Embedded text appears usually at the bottom of the video screen. Icons are placed usually configuration depend. And the problem of rendering text or icons in a video streams with minimized information loss was not yet considered. Often text or icons are hampering the appearance of the video stream. As a user experience it has been observed that when something quite interesting is happening on the video screen, it is suddenly obscured by text field or icon that is superimposed into the video.

This problem is solved by a computer software product for providing a multimedia stream, where the multimedia stream comprises a description indicating areas that are suitable for embedding additional multimedia, and where the computer software product comprises embedding means for embedding additional multimedia into the multimedia stream at the areas indicated by the description.

Analogously the problem is solved by a computer software product for providing a multimedia stream, where the multimedia stream comprises a description indicating areas that are indicated as carrying important information, and where the computer software product comprises identification means for identifying an area that is suitable for embedding additional multimedia, where the area does not intersect with the area indicated by the description, and the computer software product comprises embedding means for embedding additional multimedia into the multimedia stream at the areas identified by the identification means.

Correspondingly, also a device rendering a multimedia stream accordingly solves the problem, and, in advance the problem is solved inter alia by a method for providing a multimedia stream, where the multimedia stream comprises a description indicating areas that are suitable for embedding additional multimedia, where the method comprises the step of embedding additional multimedia into the multimedia stream at the area indicated by the description. Alternatively the multimedia stream comprises a description indicating areas that are indicated as carrying important information, where the method comprising the steps of identifying an area that is suitable for embedding additional multimedia, where this area does not intersect with the area indicated by the description, and embedding additional multimedia into the multimedia stream at the identified area.

This invention has the advantage that important information contained by a media stream is not hidden by embedded information and vice versa. I.e. that the information hiding caused by the embedding is under control. For instance considering the following scenario: Several television streams are labeled by the name of the provider. Note that the label is usually a fix part of the television stream and no embedding. This example is only for illustration purpose. Sometimes it occurs that some central information e.g. a string like a telephone number or a name is hidden by the label which causes unacceptable loss of information.

The invention is illustrated by using the figures, where
Fig. 1 shows a piece of multimedia that results when applying the method according to the invention,
Fig. 2 shows a multimedia stream that results when applying the method according to the invention,
Fig. 3 illustrates the method according to the invention.

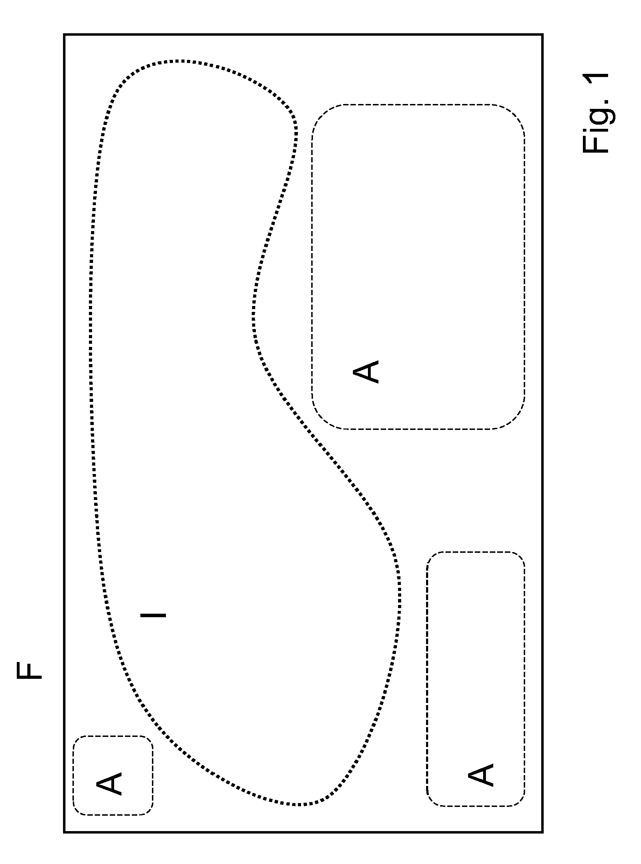

Fig. 1 shows a frame F, i.e. a geometric presentation of a part of a multimedia. If this multimedia is a video, i.e. a sequence of images, a frame corresponds roughly to a picture, a snap shot in time. Then the frame, in the concrete case the picture has an inherent geometry, like a grid of pixels, a Cartesian System. That means that the frame spans some topological space, which is called spatial extension.

In this spatial extension areas I and A could be identified. Areas correspond to set of points in the aforementioned topology. In the figure there are two kind of areas shown, a first one labeled by I indicating a part of the spatial extension that contains relevant information with respect to some criteria. Such a criteria could be the area covering the presentation of a set of moving objects inside the multimedia, or a special kind of object like a face of a person or a letter of a string, the string, or a text composed of such strings.

The complement of the first area which respect to the spatial extension of the frame is suited to embed additional multimedia. The spatial extensions of such embeddings of additional multimedia is illustrated by second areas A dashed rounded rectangle. These areas A are located inside the complement.

The idea of the inventions is to identify a temporal spatial area or region inside a piece of multimedia that is suited to embed additional multimedia. The description of such a suited temporal spatial area A that has to be located inside the complement of the interesting parts of the multimedia is used to control the embedding of the additional media. That avoids embedded additional multimedia can hide important content, i.e. the interesting parts of the original multimedia are perceptible.

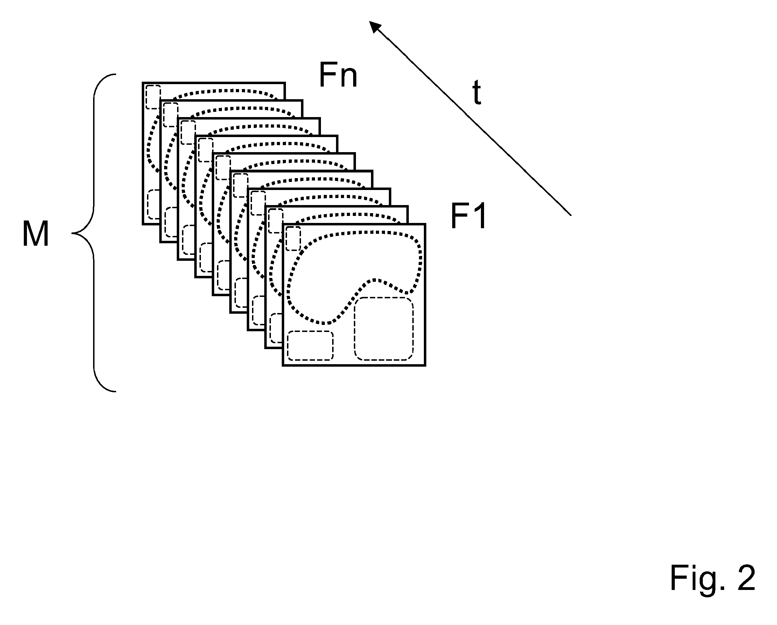

Multimedia is usually composed of several parts, e.g. of frames F1 ... Fn as shown in Fig. 2. The frames can form a morphing sequence in time. This is illustrated by the time arrow t. Together a multimedia M is formed. If this is streamed through for instance a network, the multimedia becomes a multimedia stream, as defined e.g. by MPEG.

Although the disclosure is focused on video streams, it is noted that the term multimedia covers a generic concept of media and subsumes e.g. audio, video, images, controls etc. For instance the regions could not be two dimensional as illustrated in Fig. 1 or a temporal sequence of two dimensional areas. Instead this could be a temporal interval of an audio source or even a higher dimensional virtual reality model of three dimensional objects inside a three dimensional space that are finally rendered on a two dimensional projection plane. Also the encoding technique and the media is not essential for carrying out the invention. The above mentioned principle is applicable for plain old television signals when using a video as well as a video-mixer as well as for injection of advertisements in encoded video streams in an Internet Protocol Television (IPTV) environment.

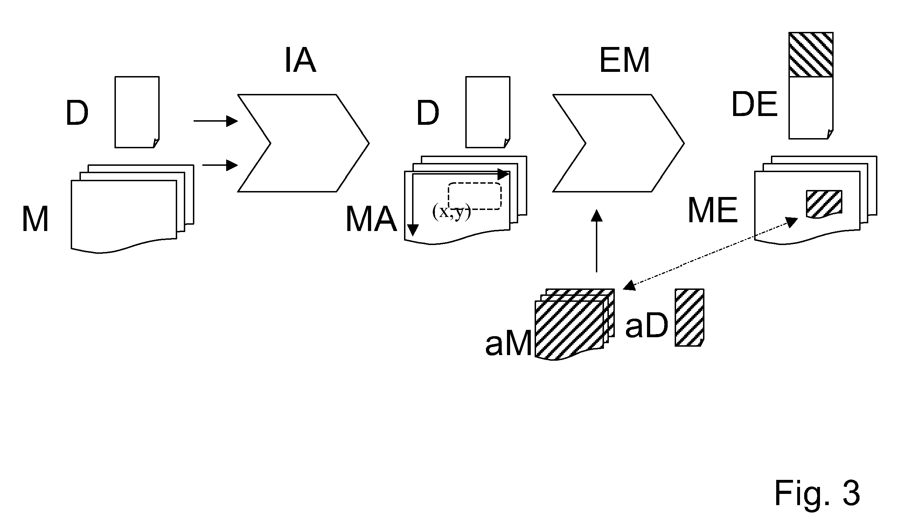

Fig. 3 illustrates the method according to the invention. The method starts with a multimedia M that is optionally accompanied by a multimedia description D indicating spatial, temporal, or temporal spatial parts of the multimedia M that are suitable for embedding additional multimedia aM. In a first step IA the parts inside the multimedia that are suitable to embed the additional multimedia aM are identified using the inherent topology of the multimedia. This is illustrated by the coordinate system and the dashed area inside the resulting multimedia MA. Such an identification step IA could be computed dynamically in real-time using motion recognition techniques, the multimedia description or could rely on the information provided by the description, only. The result of this step is simply a suitable area or region inside the multimedia that is suitable for embedding additional multimedia. That result could be a simple rectangle (x,y) that is defined by two diagonal opposed edge coordinates, say [ (x_1(t), y_1(t)) ; (x_2(t),y_2(t)) ].

In a second step EM, the additional multimedia is injected or embedded at the identified area (x,y) and optionally the multimedia description D of the multimedia M is supplemented by the description aD of the additional multimedia resulting in a multimedia with embedded additional multimedia ME having an supplemented description DE.

Preferably the regions are nor specified by exact coordinates. Since the interesting regions inside a multimedia could not specified sharp, it is assumed that the points of the inherent topology of the multimedia document form e.g. fuzzy sets instead of exact sets, see http://en.wikipedia.org/wiki/Fuzzy set for a definition. It is noticed that the method according to the invention is similar to the digital item adaptation in MPEG-21, see http://en.wikipedia.org/wiki/Digital Item, and therefore the known techniques are applicable for realizing the claimed computer software product and the claimed device, i.e. a computer program or a device suitable to perform the described method. It is also noticed that the described method is realizable and formulated as an online algorithm and hence applies to multimedia files as well as to multimedia streams.

It is noticed that a complementary embedding would also solve the aforementioned problem. That is multimedia, like advertising banners, that comprises a description for embedding a video stream in it. This in addition the advantage that the position and description of the complementary embedding does not change at the high frequency as it does, if adaptive to a multimedia content like a video stream, where the interesting areas might be highly varying.

For implementation it is noticed that a transport stream like the MPEG transport stream, see http://en.wikipedia.org/wiki/Transport stream, as used for several broadcast media as Digital Video Broadcasting (DVB), is well suited to embed the description of the area where multimedia could be embedded.

It is noticed in advance that interesting areas are intentionally identified. Thus an advertiser will define them differently than a video consumer. Preferably the definition of interesting areas and their selection definition is under a user's or consumers control.

## Claims

1. A computer software product for providing multimedia, that is adapted to provide multimedia (ME) having a description (D) indicating areas (A) that are suitable for embedding additional multimedia (aM), **characterized in that** the computer software product comprises embedding means for embedding additional multimedia (aM) into the multimedia M at the areas indicated by the description (D).

2. A computer software product for providing multimedia, that is adapted to provide multimedia (ME) having a description indicating areas (I) that are indicated as carrying important information, **characterized in that** the computer software product comprises identification means for identifying an area (A) that is suitable for embedding additional multimedia, where the area does not intersect with the area (I) indicated by the description, and the computer software product comprises embedding means for embedding additional multimedia (aM) into the multimedia (M) at the areas (A) identified by the identification means.

3. A device for rendering a multimedia stream (ME), the multimedia stream comprises a description (D) indicating areas that are suitable for embedding additional multimedia (aM), **characterized by** comprising means for injecting additional multimedia (aM) outside areas that are defined by a description of the multimedia (M) stream, where the description (D) indicating interesting areas (I) that must not hidden by additional information.

4. A device for rendering a multimedia stream (ME), the multimedia stream comprises a description (D) indicating areas (I) that are not suitable for embedding additional multimedia (aM), the device is **characterized by** comprising identification means for identifying an area (A) that is suitable for embedding additional multimedia (aM), where the area (A) does not intersect with the areas (I) indicated by the description (D), and by comprising embedding means for embedding additional multimedia (aM) into the multimedia (M) stream at the area (A) identified by the identification means.

5. A method for providing multimedia, the multimedia (ME) comprises a description (D) indicating at least one area (A) that is suitable for embedding additional multimedia (aM), the method is **characterized by** comprising the step of embedding (EM) additional multimedia (aM) into the multimedia at the area (A) indicated by the description.

6. A method for providing multimedia, the multimedia (ME) comprises a description indicating areas (I) that are indicated as carrying important information, the method is **characterized by** comprising the steps of identifying (IA) an area that is suitable for embedding additional multimedia (aM), where the area (A) does not intersect with the area indicated by the description, and embedding (EM) additional multimedia (aM) into the multimedia at the identified area.

7. The method according to one of the perceiving claims, **characterized in that** the description comprises one or more of the following specifications: shapes, coordinates, temporal intervals.

8. The method according to one of the perceiving claims, **characterized in that** the areas are partially fuzzy specified.
